# EUROPEAN PATENT SPECIFICATION

(11) **EP 3 278 881 B1**
(45) Date of publication and mention of the grant of the patent: **25.07.2018**
(21) Application number: 17183209.0
(22) Date of filing: 26.07.2017
(51) Int. Cl.: B05B 13/04, B05B 15/65, F16L 39/00

(54) **ROTATING JOINT AND PAINTING MACHINE COMPRISING IT**
DREHKUPPLUNG UND LACKIERMACHINE UMFASSEND DREHKUPPLUNG
RACCORD TOURNANT ET MACHINE DE PEINTURE COMPRENANT LE DIT RACCORD TOURNANT

(30) Priority: 05.08.2016 IT 201600082936
(43) Date of publication of application: 07.02.2018
(73) Proprietor: CEFLA S.C., 40026 Imola (IT)
(72) Inventor: Pungetti, Cristian, 40064 Ozzano dell'Emilia (Bologna) (IT); Chiarini, Stefano, 48017 Conselice (Bologna) (IT)
(74) Representative: Del Nero, Susanna

(56) References cited:
- EP-A1- 2 189 544
- WO-A1-93/17182
- IT-A1- VE20 110 060
- IT-A1- VR20 130 101

## Description

The present invention relates to the technical field of machines for painting articles, wherein spraying guns are fixed to a rotating carrier. In particular, it relates to a new rotating joint for supplying paint to said spraying guns.

In the art machines for spraying paint are known, which belong essentially to two typologies:
- oscillating spraying machines, wherein spraying guns are fixed on arms which oscillate with respect to the article to be painted;
- circular rotation spraying machines, wherein spraying guns are fixed on a rotary carrier rotating above the article to be painted.

Circular rotation spraying machines allow a simpler adjustment and a better paint transfer efficiency with respect to oscillating machines.

Such machines are provided with a known rotating joint to supply paint to the machine spraying guns (typically from eight to twenty-four guns). Such rotating joint supplies paint which often circulates inside a high-pressure circuit. A typical drawback of such machines is that high pressure leads to paint leakage, which imposes downtime, in that leaking can damage in-process articles, and lead to the replacement of the joint with high costs, deriving both from spare part, and from the time of downtime.

Substantially, said rotating joints have a hollow shaft for supplying paint to one or more circuits channelling paint to spraying guns. The presence of a plurality of circuits aims to prevent downtime due to the change of paint: typically, there are provided at least two tanks, which provide two distinct paints to distinct spraying guns. Consequently, painting processes can be performed employing different paints or different colours, withdrawing the different products in succession from their different tanks, without the need to stop the machine to change paint or colour in the tank.

An element distributing paint to spraying guns is connected to said hollow shaft. Said hollow shaft is provided with different entrance and discharge openings; every discharge opening is connected to a chamber. The plurality of chambers forms the external drum, which is stationary with respect to said hollow shaft pivoting inside it. In the different chambers, different paints are contained; between two chambers, there is provided a plurality of sealing elements, which are integral to said external drum, and therefore scrape on the surfaces of the pivoting hollow shaft. These sealing elements assure the separation between different paints.

The paints in use circulate in a circuit under high pressure. Moreover, they are often chemically corrosive, and sometimes are viscous; during the working of the painting machine, friction is generated between said sealing elements and the contact surfaced of said shaft, which in turn generates high temperatures. All together, these factors are strongly critical for the sealing of chambers, and lead to paint leakage over time. Such drawback leads to downtime for rotating joint maintenance.

In the known machines for spraying paint through guns, recirculating paint is known. Paint, through a pump and a pipe, is channelled to a plurality of spraying guns; from said guns a second pipe channels paint back to its tank. This has the aim to keep paint always moving inside pipes, and to recover non-sprayed paint. The paint has to constantly move inside pipes, in that some kinds of paint would tend to clog or to sediment if not moved.

A rotating joint is described in CN202791073; nonetheless, said joint is a hydraulic joint for distributing oil. Although similar to the present invention, such joint could not be used in the painting field.

A rotating joint is described in IT VE20 110 060 in the name of GER Elettronica, which describes a method for calibrating a rotating spray gun apparatus to spray a nebulized liquid on a moving flat object, in particular a hide.

A rotating joint is described in IT VR20 130 101 in the name of Todesco, describing a painting apparatus comprising a rotating carousel, which in its turn comprises a rotating joint.

A rotating joint is described in WO 93/17182 in the name of Formica Espanola, describing an apparatus to apply abrasion-resistant particles, to be used as a top sheet in a laminate, the apparatus comprising a rotating joint.

A rotating joint is described in EP 2 189 544 in the name of Erretre describing an apparatus for treating leathers comprising a rotating joint.

Aim of the present invention is providing an apparatus and a method to contain and remove the leakage of paint drops from said rotating joints, without the risk of damaging the in-process article, and therefore without the need of downtime to replace sealing elements.

This object is achieved by an apparatus and a method having the features of the independent claims. Advantageous embodiments and refinements are specified in claims dependent thereon.

The rotating joint according to the present invention comprises:
- A hollow shaft for distributing paint;
- A drum comprising a plurality of flanges allowing to obtain separate chambers for different paints;
- A plurality of seals assuring sealing, and therefore the separation of the different paints in the different chambers; said elements all together form a high-pressure circuit;
- In addition to the high-pressure circuit of the known rotating joints, a low-pressure circuit. Such circuit has the aim to refrigerate the seals to improve their sealing and possibly intercept paint leaking;
- A plurality of centring rings allowing the correct assembly of the seals and the correct alignment of different flanges. Said rings in the present inventions are hollow, and allow the passage of the refrigerating/cleaning liquid under low pressure.

The rotating joint according to the present invention has four main embodiments, from the simplest to the most complex:
i. Rotating joint comprising two end flanges and a single intermediate flange, for the use of one paint only;
ii. Rotating joint comprising two end flanges and two intermediate flanges, for the use of one paint only, with recirculation;
iii. Rotating joint comprising two end flanges and any number of intermediate flanges, for the use of an equivalent number of paints;
iv. Rotating joint comprising two end joints and a number multiple of two of any number of intermediate flanges, for the use of an equivalent number of paints with recirculation.

The method according to the present invention comprises the following steps:
- Supplying at least a paint, in particular from its tank, to the rotating joint, and channelling said paint to spraying guns, wherein said paints circulate inside a high-pressure circuit, and wherein optionally said paint is recirculated;
- Circulating a refrigerating/cleaning liquid inside a low-pressure circuit surrounding the high-pressure circuit, refrigerating the rotating joint, intercepting the possible leaking drops of paint, channelling them back to the supplying tank of the refrigerating/cleaning liquid.
Optionally, the cloudiness of the refrigerating/cleaning liquid due to the incorporation of paint is evaluated in order to decide maintenance/cleaning of the rotating joint.

It is worth noting that the refrigerating/cleaning liquid varies according to the used paints: it can be water, but also an organic solvent like e.g. acetone.

A first advantage of the present invention consists in obtaining a painting process free from paint leakage.

A second advantage of the present invention is limiting downtime due to paint leakage, and in the possibility of programming maintenance interventions, according to the evaluation of the degree of cloudiness of the liquid circulating in the low-pressure refrigerating circuit.

A third advantage of the present invention derives from the fact that the shape of the joint assures an easy assembly of all its parts, and particularly of the seals of the high-pressure and low-pressure circuits. Moreover, such embodiment takes into account the cleaning and maintenance needed to refurbish the joint components during its maintenance.

Further advantages and properties of the present invention are disclosed in the following description, in which exemplary embodiments of the present invention are explained in detail on the basis of the drawings:
- Figure 1: Front view of a circular rotation spraying machine;
- Figure 1A: Front view of a detail of the circular rotation spraying machine showing the position of the rotating joint inside the machine;
- Figure 2: Front view of the joint;
- Figure 3: Longitudinal section of the joint;
- Figure 4: Longitudinal section of the joint, orthogonal to the section of Figure 3;
- Figure 5: Magnified detail of a central portion of Figure 3;
- Figure 6: Magnified detail of Figure 3, at the end opposed to distribution block;
- Figure 7: Axonometric exploded view of the components of the joint;
- Figure 8: Axonometric view of an end flange;
- Figure 9: Axonometric view of an intermediate flange;
- Figure 10: Axonometric view of a hollow centring ring.

In a simplified embodiment there are provided just one tank and one high-pressure circuit for one paint only.

In a more complex embodiment, there are provided a plurality of distinct reservoirs for supplying paint, with a corresponding plurality of distinct high-pressure circuits. In the embodiment described in the attached Figures, two distinct reservoirs and two distinct high-pressure circuits are present, wherein two distinct paints can circulate; such embodiment allows the recirculation of said paints.

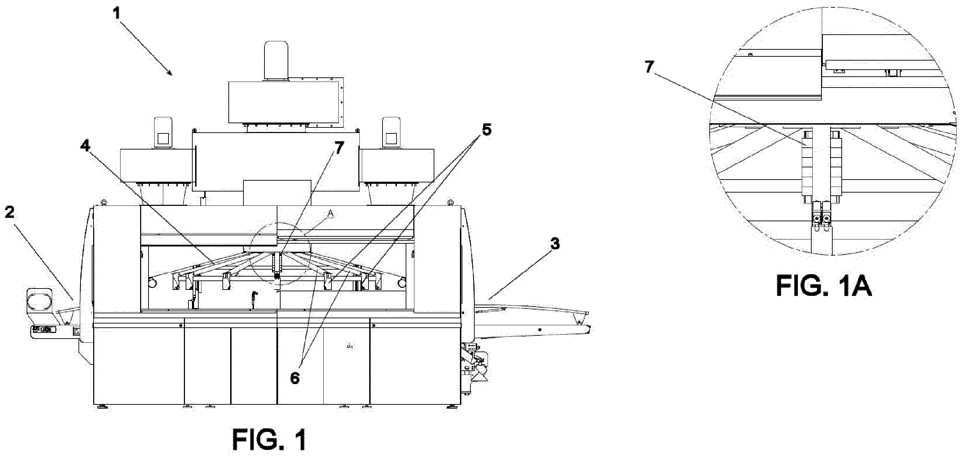

Figure 1 shows a circular rotation spraying machine for the paint spraying of (not shown) articles, comprising a painting rotary carrier 4. The articles to be painted enter through an entrance 2, are conveyed on a belt conveyor (not visible in the present Figure) under the painting rotary carrier 4, and leave painted through an exit 3.

The painting rotary carrier 4, fixed to a (not shown) ceiling of machine 1, is provided with a plurality of (not shown) spraying guns; said guns are positioned in correspondence to the spokes 6 of the painting rotary carrier 4. In the embodiment of Figure 1, there are twelve spokes of the rotary carrier; at the end of each spoke one or two spraying guns can be fixed, which brings the number of guns to twenty-four. In

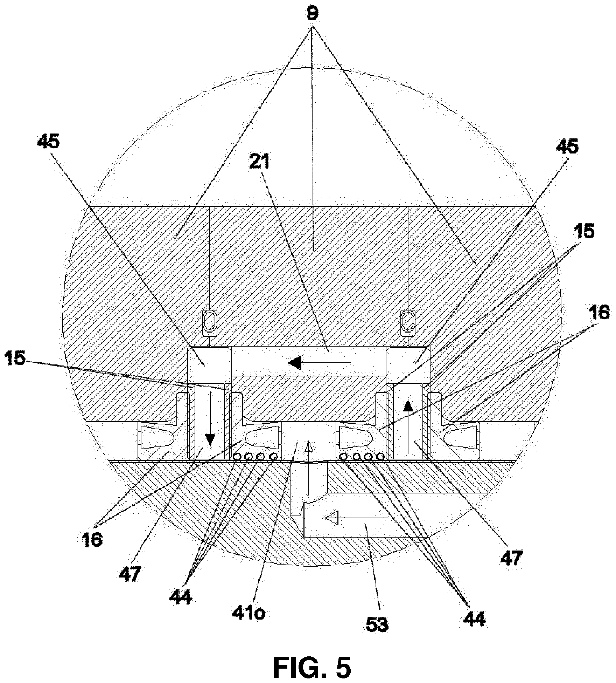

Figure 1,5 indicates the fixing point of one or two spraying guns.

The machine 1 comprises a rotating joint 7 positioned in correspondence to a centre of the painting rotary carrier 4, as can be better appreciated from the magnified detail of Figure 1A.

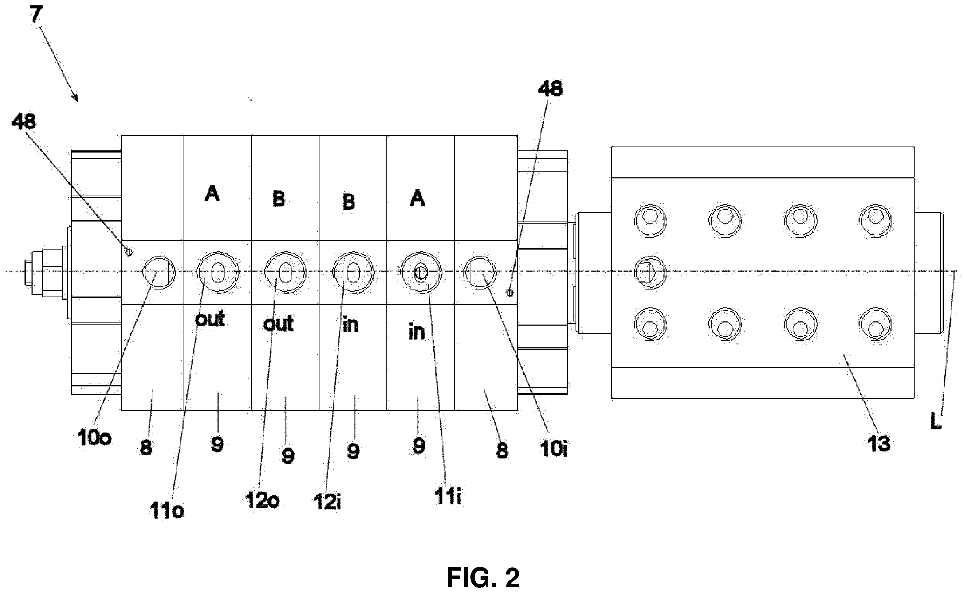

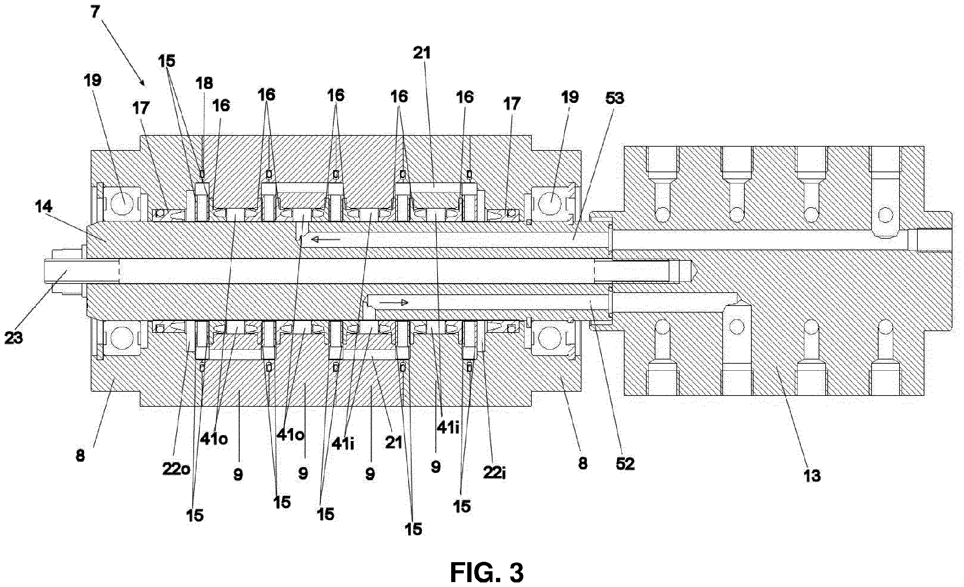

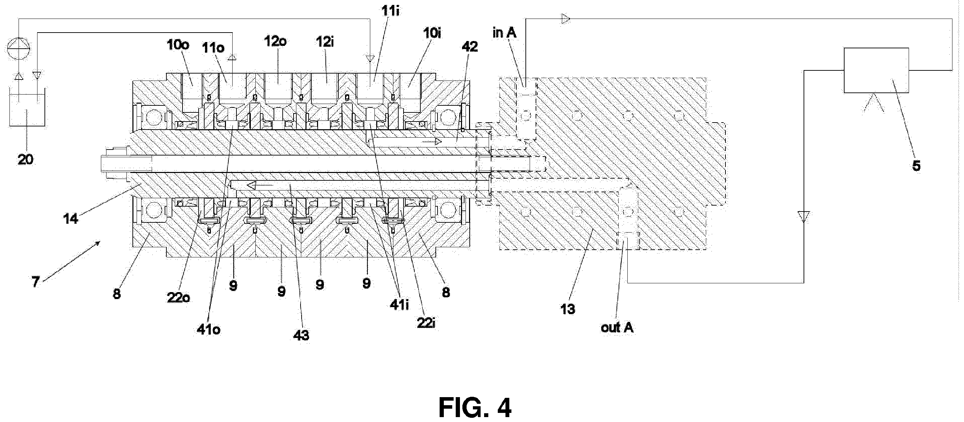

Figure 2 shows an outside front view of the rotary joint 7. The joint 7 rotates with a hollow shaft 14 (visible in Figures 3 and 4) and a distributing block 13 around a dotted axis L, which is also the rotating axis of the painting rotary carrier 4.

Said block 13 is in communication with spraying guns through suitable (not shown) pipes, and distributes different paints to different guns.

Figure 3 and Figure 4 are two longitudinal sections of the same rotating joint 7 according to two orthogonal planes, both passing through L axis of the joint 7 visible in Figure 2.

Figure 2 has the same elements already indicated in Figure 3. In Figure 3 and 4 not all identical elements were numbered in order not to overcrowd the Figure. It is important to underline that in Figure 4 a first high-pressure circuit can be seen, for supplying a first paint A, while in Figure 3 a second high-pressure circuit is apparent, for supplying a second paint B. Figure 4 aims to better clarify the working of joint 7: in fact, it allows to show the entrance and the discharge of paints and of refrigerating/cleaning liquid.

Some parts are better visible in Figure 3, and some better visible in Figure 4, therefore in the following reference will be preferably made to the component to be described, in lieu of completely describing first Figure 3 and then Figure 4.

Figure 3 shows a connection element 23 (threaded bolt) between joint 7 and distributing block 13.

Normally high-pressure circuits do not have moving parts; in this case, the rotary movement of guns and relative parts is connected with the circuit, which is stationary with respect to the machine and to supplying reservoirs. The rotating joint 7 is the element of the high-pressure circuit that determines the relative movement between the two parts of the high-pressure circuit, and allows to distribute the paint to a rotating organ.

Said joint 7 comprises a block 13 and a shaft 14, which are the rotating elements of the joint; a plurality of flanges 8 and 9, rings 15 and seals 16, 17, and 18, which remain stationary with respect to the machine. The relative movement among said components is one of the element determining the criticality of the rotating joint 7.

Flanges 8 are end flanges; there are always two end flanges in the joint 7. Flanges 9 are intermediate flanges, and their number is variable, as will be better explained in the following. A preferred embodiment illustrated in the attached Figures comprises four flanges 9, making part of two distinct high-pressure circuits, a first circuit and a second circuit for distributing two distinct paints A and B to at least a first spraying gun and at least a second spraying gun, with recirculation of paint.

Each flange 9 comprises an annular chamber or hollow entrance ring 41i or discharge ring 41o, which is in communication with a respective duct 42 or 52 suitable for receiving the respective paint A or B. Such chamber, when is supplied from tank 20 (visible in Figure 4), fills up with paint under high-pressure. Said paint is maintained in the annular chamber 41i or 41o through the action of seals 16 (visible in Figure 3). Each flange 9 can be connected to its respective tank 20 in order to receive paint to be channelled to guns, or can receive paint not used by guns to channel it back to tank 20. Therefore, for each paint, each flange 9 can be an entrance flange or a discharge flange.

In fact, if we consider a first high-pressure paint A and a second high-pressure paint B, the machine 1 comprises two respective supplying reservoirs 20 to supply guns (the tank 20 for paint B is not shown in the Figures). To keep moving each paint in the high-pressure circuit, supplying the rotating joint 7 is not enough, but the paint has to be channelled back to its respective supplying tank 20 (see Figure 4). Consequently, in the rotating joint 7 there is an entrance of the paint indicated with in A, which brings the paint from the tank to a gun, and a discharge indicated with out A which brings the not-used paint to the supplying tank 20 (Figure 2).

In Figure 2 and in Figure 4, for the first paint A an opening indicated with 11i is used as entrance, and an opening indicated with 11o is used as discharge. For a second paint B, an opening indicated with 12i is used as entrance, and an opening indicated with 12o is used as discharge. The four intermediate flanges are provided with openings 11i, 11o, 12i, 12o.

Moreover, in the end flanges 8 an entrance opening 10i and a discharge opening 10o are visible, for the low-pressure refrigerating/cleaning liquid.

The first circuit of the high-pressure paints comprises a first duct housed in the hollow shaft 14. The first paint A, contained in a first respective tank 20, is supplied from said tank 20 to the joint 7 through the entrance 11i, which, through the first conduit 42 and the distribution block 13, in its turn supplies a first spraying gun. In the case wherein the recirculation of not-used paint is necessary, the first circuit comprises a second duct 43 of the first paint A. From the spraying gun, always through the block 13, the first paint A, through the second duct 43 and its respective annular chamber, comes out from opening 11o and is again supplied to the first tank 20, as shown in Figure 4. The same goes for the second paint B, which enters from entrance 12i and goes out from discharge 12o crossing a first supplying duct 52 and a second recirculating duct 53, which are both in the hollow shaft 14.

Concerning the low-pressure circuit of the refrigerating/cleaning liquid, the liquid is withdrawn from a (not shown) tank, channelled to the entrance opening 10i and channelled back to the same tank through the discharge opening 10o (better visible in Figure 4).

In particular, the refrigerating/cleaning liquid is withdrawn from a (not shown) tank, and, through a (not shown) pipe, enters through an entrance opening 10i inside the rotating joint 7, and circulates in a low-pressure circuit comprising a first cavity 45 and entrance gap 22i, a first connecting hole 21, a second cavity 45, a hole 47, a second cavity 45, a second connection hole 21 and a second gap 22o, to channel refrigerating/cleaning liquid from the entrance opening 10i of the first end flange 8 to the discharge opening 10o of the second end flange.

A first annular chamber 41 of the high-pressure circuit is interposed between the first gap 22i and the second gap 22o along L axis, and is placed more internally than the connection hole 21 with respect to L axis. In this way, the low-pressure circuit of the refrigerating/cleaning liquid, comprising said not-shown tank, 10i, 22i, 45, 47, 45, 21, 45, 47, 45, 22o, not-shown tank, completely surrounds the first annular chamber 41 and can intercept undesired possible leakage of the first paint A.

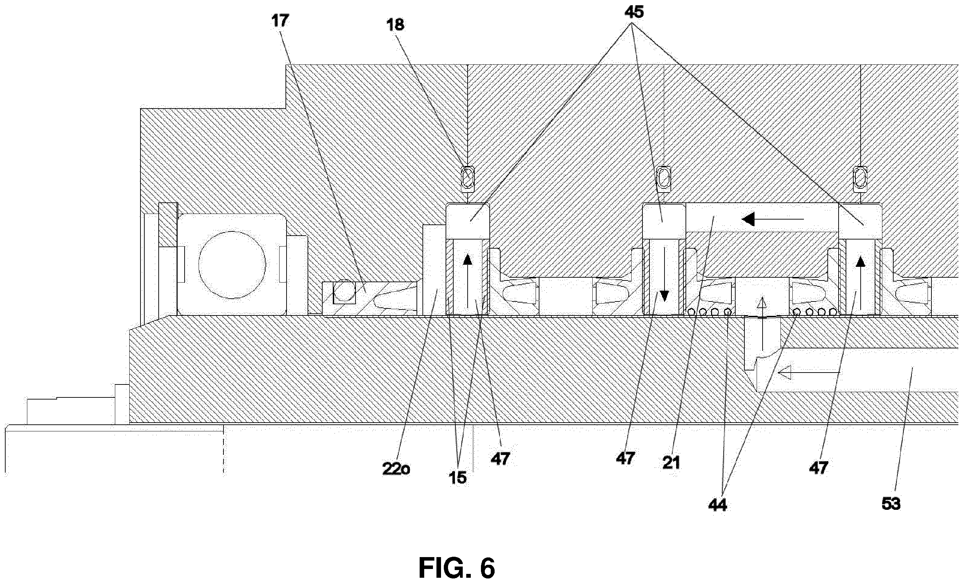

The path of the refrigerating-cleaning liquid between the entrance opening 10i and the discharge opening 10o is better visible in Figure 3 and in the details shown in Figures 5 and 6. The refrigerating/cleaning (illustrated with black arrows) crosses the centring hollow rings 5 and the flanges 9 through the holes 21 obtained in the intermediate flanges 9, and the gaps 22i and 22o obtained in the end flanges 8. In this way, the liquid crosses all the flanges and all the rings to refrigerate the joint, and more specifically high-pressure sealing elements.

The path of the refrigerating/cleaning liquid was studied so as to allow to intercept possible leakages 44 from the seals of the high-pressure circuit. The low-pressure circuit completely surrounds the high-pressure circuit, and is contained inside the joint through the seals 17 and 18.

In Figure 3 the duct 52 is visible, channelling paint B from the flange 9 to the block 13, and the duct 53, bringing back paint B from block 13 to flange 9. In Figure 4 the duct 42 is visible, channelling paint A from flange 9 to block 13, and the duct 42 channelling back paint A from block 13 to flange 9.

Figure 5 shows a magnified detail of Figure 3 in order to highlight the areas where the high-pressure paint (illustrated with white arrows) and the refrigerating/cleaning liquid (illustrated with black arrows) are. The white arrows show the path of the high-pressure paint B.

In Figure 5, the hollow centring ring 15 is shown in a longitudinal section, wherein the passage sections are highlighted, in particular the sections 45 and 47. The ring 15 is hollowed out to form a cavity 45 and pierced to get a hole 47, to allow the passage of the refrigerating/cleaning liquid.

In Figure 5, the possible leakage of high-pressure paint is shown in the form of drops 44. The possibly leaked paint is intercepted by the flow of low-pressure refrigerating/cleaning liquid.

Figure 6 shows a detail of Figure 3 nearer to the end of joint 7, with respect to the detail shown in Figure 5, allowing to better appreciate the working of the low-pressure seals 17 and 18, and the path of the low-pressure refrigerating/cleaning liquid. For each flange 9, the refrigerating/cleaning liquid can cross the joint 7 exploiting the holes 21 on flanges 9, the holes 47 on ring 15, the cavity 45 obtained in ring 15. In this way, refrigerating/cleaning liquid can cross the joint 7 and connect the gaps 22i and 22o placed at the ends of joint 7.

In the end flanges 8 of the joint 7, refrigerating/cleaning liquid fills up the hole 47, the cavity 45 and the gap 22i or 22o; refrigerating liquid is maintained inside these areas thanks to seals 17 and 18.

It is worth noting that the low-pressure circuit can intercept leakages 44 thanks to the difference in pressure existing between the two circuits, which leads leakages toward the low-pressure circuit. Should the high-pressure circuit not be supplied with paint, leakages could reverse their direction.

Possible leakages from high-pressure seals 16 are intercepted by refrigerating/cleaning liquid, modifying the cloudiness of the liquid itself, appreciable by human eye observing the content of the tank of the liquid itself.

Leakages of refrigerating/cleaning liquid from low-pressure seals 18 (O-rings) are easily visible to the naked eye on the surface of the joint 7 itself. Leakages of refrigerating/cleaning liquid from seal 17 would become visible only after said liquid crossed bearing 19. To hasten the visibility of this leakage, in end flange 8 holes 48 were drilled (visible in Figure 2), communicating with the areas housing bearings 19. On the other hand, leakages 44 in intermediate flanges 9 are more probably intercepted by refrigerating/cleaning liquid, and are visible as cloudiness of refrigerating/cleaning liquid in the supplying tank.

The drops 44 leaked from the high-pressure circuit are intercepted by the low-pressure circuit and channelled to the (not shown) tank of refrigerating/cleaning liquid. This, over time, leads to the cloudiness of the liquid contained in the tank in a way appreciable by human eye, allowing to qualitatively determine the degree of containment of the paint provided by the high-pressure seals, and to plan well in advance a maintenance intervention on the machine 1, and particularly of joint 7, which is then replaced.

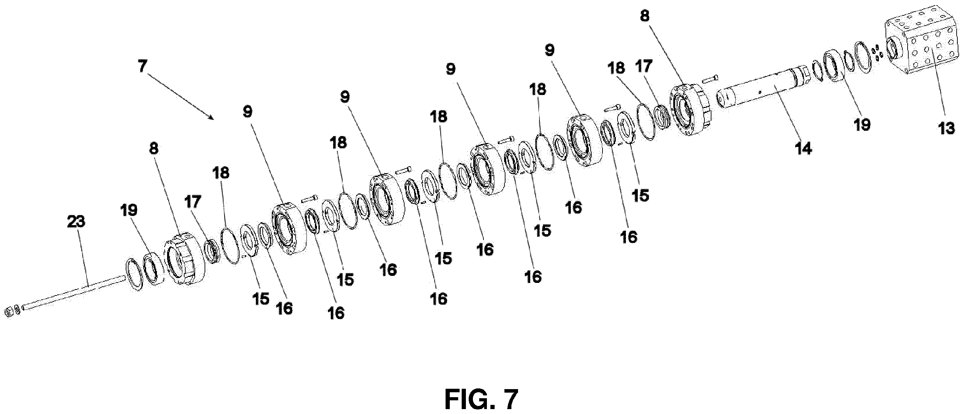

Figure 7 shows an axonometric exploded view of the components of the rotating joint 7. Such components were already described. At the ends of Figure 7, on one end the connecting element 23, and at the other end the distributing block 13 are visible.

Said refrigerating/cleaning liquid enters inside flange 8, fills up the gap 22i through the cavity 45 in the hollow centring ring 15, and diametrically crosses the ring 15 through the hole 47 obtained in the hollow ring 15. In the intermediate 9 flange a through hole 21 is obtained, parallel to L axis, leading to a second cavity 45, and then crossing the second hole 47. The hollow ring 15 is housed in a seat obtained hollowing out the two opposing flanges 9 on their sides.

Between an end flange 8 and an adjacent intermediate flange 9, a seat for the centring ring 15 is hollowed out in the flange 8 on one side and in the flange 9 on the other side, then putting one near the other.

The zig-zag path of the refrigerating/cleaning liquid is imparted by intermediate flanges 9, which are mounted one near the other flipping them by 180° with respect to L axis, keeping the discharge openings 11 or 12 always oriented in the same direction (better visible in Figure 7).

The assembly of intermediate flanges 9 is foolproof for human operators, in that the assembly of flanges 9 is not allowed keeping through holes 21 aligned.

The hollow centring ring 15 allows the correct alignment of the different flanges 8 or 9, and the correct pressure on sealing seals 16; moreover, the presence of the cavity 45 and of the through hole 47 allows the zig-zag passage of the refrigerating/cleaning liquid.

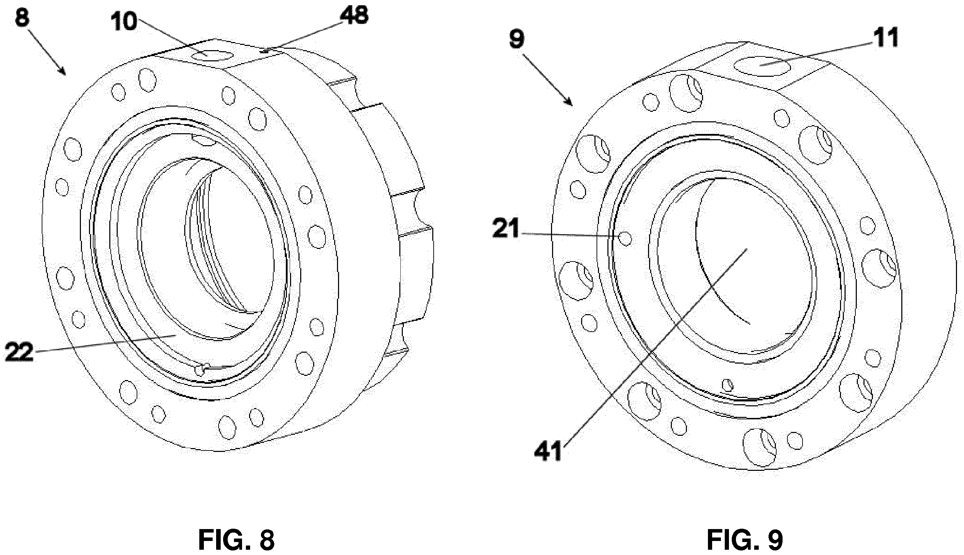

Figure 8 shows an end flange in an axonometric view. Its opening 10 is visible, which according to its position and embodiment can be an entrance opening 10i or a discharge opening 10o of the refrigerating/cleaning liquid. The gap 22 is as well visible, which as for opening 10, can be an entrance opening 22i or a discharge opening 22o. Moreover, the hole 48 is visible, allowing the discharge of a mixture of paint and refrigerating/cleaning liquid on the surface of joint 7, so highlighting the need of maintenance. As can be appreciated in Figure 7, the hollow shaft 14 is coaxial with flange 8.

Figure 9 shows an intermediate flange 9 in an axonometric view. The opening 11 or 12 is visible, which according to its position and embodiment can be an entrance opening 11i or 12i, or a discharge opening 11o or 12o of paints A, B, .... The through hole 21 of the refrigerating/cleaning liquid is visible. Moreover, the chamber 41 is visible, housing hollow shaft 14, which takes the most of the available room, making chamber 41 a coaxial ring (span). As can be appreciated in Figure 7, the hollow shaft 14 is coaxial with flange 9.

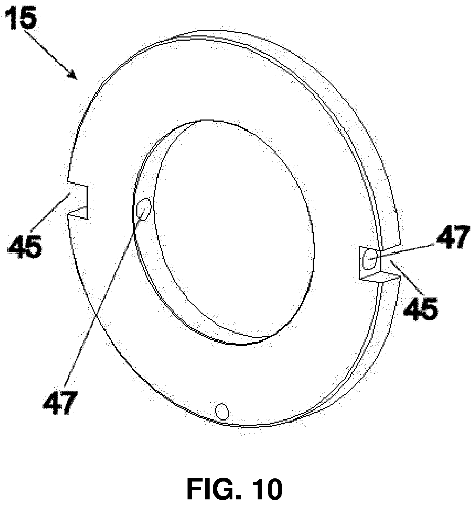

Figure 10 shows a hollow centring ring 15, having two through holes 47 diametrically obtained in two respective cavities 45 for the passage of refrigerating/cleaning liquid.

In a (not shown) alternative embodiment, the four high-pressure chambers obtained through intermediate flanges 9, instead of working as entrance and discharge chamber of two distinct paints with recirculation, can work as four entrance chambers of four distinct paint circuits without recirculation.

In a preferred embodiment, the circular rotation spraying machine 1 is provided with at least two rotating joints 7. The in-use rotating joint 7 is dismantled from machine 1 and replaced with another joint 7. The dismantled joint 7 can be inspected and refurbished for a successive reuse.

The method according to the present invention comprises the following steps, for the high-pressure circuit of paints:
- Withdrawing one or more paints from respective supplying tanks 20 and channelling them to rotating joint 7 through respective pneumatic pumps, preferably piston pumps;
- Channelling said paints through the hollow shaft 14 of rotating joint 7 to the rotating distribution block 13, from which paints reach spraying guns;
- Spraying paints on the articles through spraying guns; in a preferred embodiment, the not-sprayed paint is re-channelled to supplying tank 20, always through the distribution block 13 and the hollow shaft 14;
for the low-pressure circuit of the refrigerating/cleaning liquid:
- Withdrawing refrigerating/cleaning from its (not shown) supplying tank, and channelling it to joint 7 through a pneumatic pump, preferably a diaphragm pump;
- Circulating the refrigerating/cleaning liquid inside joint 7 through the hollow rings 15 and the holes 21 in flanges 9, and gaps 22 in end flanges 8; the main function of the passage of refrigerating/cleaning liquid is reducing temperature of the joint, particularly of all its elements; should the liquid, during its path inside the joint, intercept leaked drops 44 of paints, it channels them to the supplying tank of refrigerating/cleaning liquid;
- The visible cloudiness of the refrigerating/cleaning liquid allows to plan a maintenance intervention of the rotating joint itself.

In an alternative embodiment, an automatic detection system detects the cloudiness of the refrigerating/cleaning liquid, and the cloudiness of the liquid beyond a pre-set threshold leads to the activation of a signalling system for the human operator in charge of the maintenance of the circular rotation spraying machine 1.

### List of reference numerals

- 1: Circular rotation spraying machine
- 2: Entrance of the articles to be painted
- 3: Exit of the painted articles
- 4: Rotary carrier
- 5: Fixing point of spraying guns
- 6: Spokes
- 7: Rotating joint
- 8: End flanges
- 9: Intermediate flanges
- 10: Entrance and discharge openings of the refrigerating/cleaning liquid
- 11: Entrance and discharge openings of the first paint
- 12: Entrance and discharge openings of the second paint
- 13: Rotating distribution block
- 14: Rotating hollow shaft
- 15: Hollow centring ring
- 16: Seal
- 17: Low-pressure seal for protecting bearing
- 18: Perimetral seal
- 19: Bearing
- 20: Supplying tank
- 21: Holes of the low-pressure circuit on flanges 9
- 22: Entrance and discharge opening for the refrigerating/cleaning liquid
- 23: Connection element
- 41: High-pressure entrance or discharge chamber for high-pressure paint
- 42: Entrance duct for high-pressure paint A inside hollow shaft
- 43: Discharge duct for high-pressure paint A inside hollow shaft
- 44: Leaked paint
- 45: Cavity
- 47: Through hole of refrigerating/cleaning liquid in ring 15
- 48: Inspection hole of possible oozing from seal 17
- 52: Entrance duct for high-pressure paint B inside hollow shaft
- 53: Discharge duct for high-pressure paint B inside hollow shaft

## Claims

1. Rotating joint (7) for distributing a paint (A) to at least a spraying gun, comprising:
- A hollow shaft (14), which rotates around its longitudinal axis (L);
- A high-pressure first circuit (20, 11i, 41i, 42, spraying gun) for channelling a first paint (A) to a first spraying gun, comprising a first duct (42) for said first paint (A), housed inside said hollow shaft (14);
- A drum comprising a plurality of flanges coaxial to axis (L), arranged around shaft (14) and in contact with each other, comprising: at least a first intermediate flange (9), in its turn comprising a first annular chamber (41i) in communication with said first duct (42) and having a first opening (11i) suitable for receiving said first paint (A), which is in communication with said first annular chamber (41i); a first end flange (8) and a second end flange (8), said first intermediate flange (9) being interposed between said first and second end flange (8);
- Said first paint (A) of said first high-pressure circuit being received from said first opening (11i) and being channelled to the said spraying gun through said first annular chamber (41i) and first duct (42);
**characterized in that**
- Said first end flange (8) comprises a respective entrance opening (10i) for a refrigerating/cleaning liquid, said second end flange (8) comprises a respective discharge opening (10o) of said refrigerating/cleaning liquid, and said first intermediate flange (9) comprises a respective first connecting hole (21), in particular parallel to said axis (L);
**and in that**
- Said drum comprises a first annular end gap (22i), obtained at least partly in said first end flange (8) and in communication with said entrance opening (10i) of said refrigerating/cleaning liquid; a second annular end gap (22o) obtained at least partly in the second end flange (8) which is in communication with said discharge opening (10o) of refrigerating/cleaning liquid; said first connection hole (21) being in communication with said first gap (22i) and with said second gap (22o);
**and in that**
- Said rotating joint comprises a low-pressure circuit (not-shown tank, 10i, 22i, 45, 47, 45, 21, 45, 47, 45, 22o, 10o, not-shown tank) allowing to channel said refrigerating/cleaning liquid from said entrance opening (10i) of said first end flange (8) to said discharge opening (10o) of said second end flange (8) through said first gap (22i), said first connection hole (21) and said second gap (22o); and wherein
- Said first annular chamber (41i) of said high-pressure circuit is interposed between said first gap (22i) and second gap (22o) along said longitudinal axis (L) and is arranged more internally than connection hole (21) with respect to said axis (L), so that said low-pressure circuit (not-shown tank, 10i, 22i, 45, 47, 45, 21, 45, 47, 45, 22o, 10o, not-shown tank) completely surrounds said annular chamber (41i) and can intercept possible undesired leakages (44) of said first paint (A).

2. Rotating joint (7) according to claim 1, wherein said first high-pressure circuit further comprises a second duct (43) for said first paint (A), housed inside shaft (14) to receive from said spraying gun said first non-used paint (A), and wherein said drum comprises a second intermediate flange (9) in its turn comprising an annular chamber (41o), in communication with said second duct (43), and a second discharge opening (11o) suitable for discharging first non-used paint (A), which are in communication with each other, said second intermediate flange (9) being interposed between said first intermediate flange (9) and said second end flange (8) and being coaxial with said axis (L) and in contact with said first intermediate flange (9); said high-pressure circuit further comprising said second annular chamber (41o) and said second duct (43) to channel with recirculation said first non-used paint (A) to said second opening (11o) through said second duct (43) for said first paint (A); and wherein said second intermediate flange (9) comprises a respective second connection hole (21), in particular parallel to axis (L);
and wherein said drum further comprises a first intermediate cavity (45) obtained in said first intermediate flange (9) and in said second intermediate flange (9), said first cavity (45) being in communication with said first connection hole (21) and with said second hole (47),
and wherein said low-pressure circuit (not-shown tank, 10i, 22i, 45, 47, 45, 21, 45, 47, 45, 22o, 10o, not-shown tank) further comprises said first intermediate cavity (45) and said second connection hole (21) to channel refrigerating/cleaning liquid from said entrance opening (10i) of said first end flange (8) to said discharge opening (10o) of said second end flange (8) through said first end gap (22i), said first connection hole (21), said first cavity (45), said second connection hole (21) and second gap (22o);
said second annular chamber (41o) being interposed along said axis (L) between said first chamber (41i) and said second gap (22o), and being arranged more internally than said second connection hole (21), so that said low-pressure circuit (not-shown tank, 10i, 22i, 45, 47, 45, 21, 45, 47, 45, 22o, 10o, not-shown tank) completely surrounds also said second annular chamber and can intercept possible undesired leakages (44) of said first non-used paint (A).

3. Rotating joint (7) according to claim 1, further comprising at least a second high-pressure circuit for channelling at least a second paint (B, ...) to at least a second spraying gun, comprising a respective duct (52) for said at least second paint (B, ...) housed inside said shaft (14), and wherein said drum comprises at least a second intermediate flange (9) comprising a second annular chamber (41), in communication with said first duct (52) for said at least second paint (B, ...), and a second entrance opening (12i), suitable for receiving said at least second paint (B, ...), which is in communication with said second annular chamber (41), said at least second intermediate flange (9) being interposed between said first intermediate flange (9) and said second end flange (8), coaxial to said axis (L) and in contact with said first intermediate flange (9); said at least second high-pressure circuit comprising moreover said second annular chamber (41) and said first duct (52) to channel said at least paint (B, ...) from said second opening to said at least second spraying gun; and wherein said at least second intermediate flange (9) comprises a second connection hole (21), in particular parallel to said axis (L);
and wherein said drum comprises further a first intermediate cavity (45) obtained at least partially in said first intermediate flange (9) and in said second intermediate flange (9), said first intermediate cavity (45) being in communication with said first connection hole (21), and with said second hole (47);
and wherein said low-pressure circuit (not-shown tank, 10i, 22i, 45, 47, 45, 21, 45, 47, 45, 22o, 10o, not shown tank) comprises said first intermediate cavity (45) and gap (22i), said first connection hole (21), said second intermediate cavity (45), said hole (47), said second connection hole (21) and said second gap (22o) to channel said refrigerating/cleaning liquid from said entrance opening (10i) of said first end flange (8) to said discharge opening (10o) of said second end flange (8);
said second annular chamber (41) being interposed along axis (L) between said first annular chamber (41) and said second gap (22o), and being arranged more internally than said second connection hole (21), so that said low-pressure circuit (not shown tank, 10i, 22i, 45, 47, 45, 21, 45, 47, 45, 22o, 10o, not shown tank) completely surrounds said second annular chamber and can intercept possible undesired leakages (44) of said paints (A and/or B and/or ...).

4. Rotating joint (7) according to claim 2, further comprising a plurality of high-pressure circuits for channelling respective paints (A, B, ...) to at least a respective spraying gun, each high-pressure circuit comprising respective first ducts (42, 52, ...) for channelling respective paints (A, B, ...) housed inside said hollow shaft (14), and wherein said drum comprises a plurality of intermediate flanges (9), said intermediate flanges (9) being in pairs to channel each paint (A, B, ...) with recirculation; said intermediate flanges (9) comprising each a respective annular chamber (41i or 41o) in communication with a respective duct (42, 52, ...; 43, 53, ...) to receive said paint, said intermediate flanges (9) being arranged in pairs between said first end flange (8) and second end flange (8), and wherein said drum comprises annular cavities (41) obtained in adjacent intermediate flanges (9), said first gap (22i) and said second gap (22o) being obtained between respective intermediate adjacent flanges (9), or between an intermediate flange (9) adjacent to an end flange (8).

5. Rotating joint (7) according to one of claims 1 to 4, comprising a plurality of hollow centring rings (15), said first gap (22i), said second gap (22o) and said intermediate cavity (45) being obtained each inside a respective hollow centring ring (15), each centring ring being housed in a respective seat at least obtained between adjacent intermediate flanges (9), or between adjacent intermediate flanges (9) and end flanges (8).

6. Rotating joint (7) according to any of the preceding claims, comprising a hole (48) obtained in said end flange (8) communicating with a seat housing a bearing (19), allowing the discharge of paint (A e/o B and/or ...) mixed with refrigerating/cleaning liquid on the surface of said joint (7) itself.

7. Method for painting articles making use of a painting machine (1) comprising a rotating joint (7) according to claims 1-6, comprising the following steps:
- Withdrawing at least one paint (A, B, ...) from its respective supplying tank (20) and channelling it to said rotating joint (7) through at least a pneumatic pump, preferably a piston pump, and from here to at least a spraying gun;
- Circulating said at least one paint (A, B, ...) inside a high-pressure circuit (20, 11i, 41i, 42, spraying gun, 43, 41o, 11o, 20 for paint A; 20, 12i, 41i, 52, spraying gun, 53, 41o, 12o, 20 for product B; ...);
**characterized in that** it comprises the following step:
- Completely surrounding the high-pressure circuit of paints (A, B, ...) inside a low-pressure circuit (not-shown tank, 10i, 22i, 45, 47, 45, 21, 45, 47, 45, 22o, 10o, not-shown tank), inside which a refrigerating/cleaning liquid circulates.

8. Method for painting articles according to claim 7, wherein said at least one paint (A, B, ...) is recirculated, channelling back said at least one non-used paint from its at least one spraying gun to its respective supplying tank (20).

9. Method for painting articles according to claim 7 or 8, wherein the cloudiness of said refrigerating/cleaning liquid detectable in its (not shown) tank allows to plan a downtime for replacing/cleaning said rotating joint (7).

10. Circular rotation spraying machine (1) for painting articles comprising a spraying booth, a conveyor for said articles to be painted, a rotary carrier (4) supporting a plurality of spraying guns, **characterized in that** it is provided with at least one rotating joint (7) for distributing paints (A, B, ...) according to one of the preceding claims (7), preferably provided with at least two rotating joints (7), a first joint mounted on said machine and a second spare joint, wherein at downtime said second rotating joint (7) replaces the out of order first joint (7) providing in a different moment to the cleaning/repair of the replaced, out of order first joint (7).

## Patentansprüche

1. Drehgelenk (7) zum Verteilen einer Farbe (A) auf mindestens eine Spritzpistole, umfassend:
- eine Hohlwelle (14), welche sich um ihre Längsachse (L) dreht;
- einen ersten Hochdruckkreislauf (20, 11i, 41i, 42, Spritzpistole) zum Kanalisieren einer ersten Farbe (A) zu einer ersten Spritzpistole, umfassend einen ersten Kanal (42) für die erste Farbe (A), der in der Hohlwelle (14) untergebracht ist;
- eine Trommel, die eine Vielzahl von zur Achse (L) koaxialen Flanschen aufweist, die um die Welle (14) angeordnet sind und miteinander in Kontakt stehen, umfassend: mindestens einen ersten Zwischenflansch (9), der seinerseits eine erste ringförmige Kammer (41i) in Verbindung mit dem ersten Kanal (42) umfasst und mit einer ersten Öffnung (11i), die geeignet ist, die erste Farbe (A) aufzunehmen, die mit der ersten ringförmigen Kammer (41i) in Verbindung steht; einen ersten Endflansch (8) und einen zweiten Endflansch (8), wobei der erste Zwischenflansch (9) zwischen dem ersten und dem zweiten Endflansch (8) angeordnet ist;
- wobei die erste Farbe (A) des ersten Hochdruckkreises von der ersten Öffnung (11i) aufgenommen und durch die erste ringförmige Kammer (41i) und den Kanal (42) zur Spritzpistole geleitet wird;
**dadurch gekennzeichnet, dass**
- der erste Endflansch (8) eine entsprechende Eintrittsöffnung (10i) für eine Kühl/Reinigungsflüssigkeit aufweist, der zweite Endflansch (8) eine entsprechende Austrittsöffnung (10o) der Kühl/Reinigungsflüssigkeit aufweist und der erste Zwischenflansch (9) jeweils ein erstes Verbindungsloch (21), insbesondere parallel zur Achse (L) umfasst;
und dass
- die Trommel einen ersten ringförmigen Endspalt (22i) umfasst, der zumindest teilweise in dem ersten Endflansch (8) erhalten wird und welcher mit der Eintrittsöffnung (10i) der Kühl/Reinigungsflüssigkeit in Verbindung steht; einen zweiten ringförmigen Endspalt (22o), der zumindest teilweise in dem zweiten Endflansch (8) erhalten wird, der in Verbindung mit der Auslassöffnung (10o) der Kühl/Reinigungsflüssigkeit steht; wobei das erste Verbindungsloch (21) mit dem ersten Spalt (22i) und mit dem zweiten Spalt (22o) in Verbindung steht; und
- das Drehgelenk einen Niederdruckkreis (nicht gezeigter Tank, 10i, 22i, 45, 47, 45, 21, 45, 47, 45, 22o, 10o, nicht gezeigter Tank) umfasst, der es ermöglicht, die Kühl/Reinigungsflüssigkeit von der Eintrittsöffnung (10i) des ersten Endflansches (8) zur Auslassöffnung (10o) des zweiten Endflansches (8) durch den ersten Spalt (22i), das erste Verbindungsloch (21) und den zweiten Spalt (22o) zu kanalisieren; und wobei
- die erste ringförmige Kammer (41i) des Hochdruckkreises zwischen dem ersten Spalt (22i) und dem zweiten Spalt (22o) entlang der Längsachse (L) angeordnet ist und mehr nach innen als das Verbindungsloch (21) bezüglich der Achse (L) angeordnet ist, so dass der Niederdruckkreis (nicht gezeigter Tank, 10i, 22i, 45, 47, 45, 21, 45, 47, 45, 22o, 10o, nicht gezeigter Tank) die ringförmige Kammer (41i) vollständig umgibt und mögliche unerwünschte Leckagen (44) der ersten Farbe (A) auffangen kann.

2. Drehgelenk (7) nach Anspruch 1, wobei der erste Hochdruckkreis ferner einen zweiten Kanal (43) für die erste Farbe (A) aufweist, die in der Welle (14) untergebracht ist, um von der Spritzpistole die erste nicht verwendete Farbe (A) zu empfangen, und wobei die Trommel einen zweiten Zwischenflansch (9) umfasst, der seinerseits eine ringförmige Kammer (41o) in Verbindung mit dem zweiten Kanal (43) und eine zweite zum Entladen einer ersten nicht verwendeten Farbe (A) geeignete Auslassöffnung (11o) umfasst, die miteinander in Verbindung stehen, wobei der zweite Zwischenflansch (9) zwischen dem ersten Zwischenflansch (9) und dem zweiten Endflansch (8) angeordnet ist und koaxial zur Achse (L) ist und in Kontakt mit dem ersten Zwischenflansch (9) steht; wobei der Hochdruckkreis ferner die zweite ringförmige Kammer (41o) und die zweite Leitung (43) umfasst, um die erste nicht verwendete Farbe (A) zur zweiten Öffnung (11o) durch den zweiten Kanal (43) für die erste Farbe (A) umzuwälzen; und wobei der zweite Zwischenflansch (9) ein jeweiliges zweites Verbindungsloch (21) aufweist, insbesondere parallel zur Achse (L);
und wobei die Trommel ferner einen ersten Zwischenhohlraum (45) aufweist, der in dem ersten Zwischenflansch (9) und in dem zweiten Zwischenflansch (9) hergestellt ist, wobei der erste Hohlraum (45) mit dem ersten Verbindungsloch (21) und mit dem zweiten Loch (47) in Verbindung steht,
und wobei der Niederdruckkreis (nicht gezeigter Tank, 10i, 22i, 45, 47, 45, 21, 45, 47, 45, 22o, 10o, nicht gezeigter Tank) ferner den ersten Zwischenhohlraum (45) und das zweite Verbindungsloch (21) umfasst, um Kühl/Reinigungsflüssigkeit von der Eintrittsöffnung (10i) des ersten Endflansches (8) zu der Auslassöffnung (10o) des zweiten Endflansches (8), durch den ersten Endspalt (22i), das erste Verbindungsloch (21), den ersten Hohlraum (45), das zweite Verbindungsloch (21) und den zweiten Spalt (22o) zu kanalisieren;
wobei die zweite ringförmige Kammer (41o) entlang der Achse (L) zwischen der ersten Kammer (41i) und dem zweiten Spalt (22o) angeordnet ist, und mehr nach innen als das zweite Verbindungsloch (21) angeordnet ist, so dass der Niederdruckkreis (nicht gezeigter Tank, 10i, 22i, 45, 47, 45, 21, 45, 47, 45, 22o, 10o, nicht gezeigter Tank) auch die zweite ringförmige Kammer vollständig umgibt und mögliche unerwünschte Leckagen (44) der ersten nicht verwendeten Farbe (A) auffangen kann.

3. Drehgelenk (7) nach Anspruch 1, weiterhin umfassend mindestens einen zweiten Hochdruckkreis zum Kanalisieren mindestens einer zweiten Farbe (B, ...) zu mindestens einer zweiten Spritzpistole, umfassend einen entsprechenden Kanal (52) für die mindestens eine zweite Farbe (B, ...), die in der Welle (14) untergebracht ist, und wobei die Trommel mindestens einen zweiten Zwischenflansch (9) umfasst, der eine zweite ringförmige Kammer (41) in Verbindung mit dem ersten Kanal (52) für die mindestens zweite Farbe (B, ...) und eine zweite zur Aufnahme der mindestens einen zweiten Farbe (B, ...) geeigneten Eingangsöffnung (12i) umfasst, die mit der zweiten ringförmigen Kammer in Verbindung steht (41), wobei der mindestens eine zweite Zwischenflansch (9) zwischen dem ersten Zwischenflansch (9) und dem zweiten Endflansch (8) koaxial zur Achse (L) und in Kontakt mit dem ersten Zwischenflansch (9) angeordnet ist; wobei der mindestens zweite Hochdruckkreis darüber hinaus die zweite ringförmige Kammer (41) und die erste Leitung (52) aufweist, um die mindestens eine Farbe (B, ...) von der zweiten Öffnung zu der mindestens zweiten Spritzpistole zu kanalisieren; und wobei der mindestens zweite Zwischenflansch (9) ein zweites Verbindungsloch (21) aufweist, welches insbesondere parallel zur Achse (L) liegt;
und wobei die Trommel ferner einen ersten Zwischenhohlraum (45) aufweist, der zumindest teilweise in dem ersten Zwischenflansch (9) und in dem zweiten Zwischenflansch (9) erhalten wird, wobei der erste Zwischenhohlraum (45) mit dem ersten Verbindungsloch (21) und mit dem zweiten Loch (47) in Verbindung steht;
und wobei der Niederdruckkreis (nicht gezeigter Tank, 10i, 22i, 45, 47, 45, 21, 45, 47, 45, 22o, 10o, nicht gezeigter Tank) den ersten Zwischenhohlraum (45) und den Spalt (22i), das erste Verbindungsloch (21), der zweite Zwischenhohlraum (45), das Loch (47), das zweite Verbindungsloch (21) und den zweiten Spalt (22o) umfasst, um die Kühl/Reinigungsflüssigkeit von der Eintrittsöffnung (10i) des ersten Endflansches (8) zu der Auslassöffnung (10o) des zweiten Endflansches (8) zu kanalisieren;
wobei die zweite ringförmige Kammer (41) entlang der Achse (L) zwischen der ersten ringförmigen Kammer (41) und dem zweiten Spalt (22o) angeordnet ist und mehr nach innen als das zweite Verbindungsloch (21) angeordnet ist, so dass der Niederdruckkreis (nicht gezeigter Tank, 10i, 22i, 45, 47, 45, 21, 45, 47, 45, 22o, 10o, nicht gezeigter Tank) die zweite ringförmige Kammer vollständig umgibt und mögliche unerwünschte Leckagen (44) der Farben (A und/oder B und/oder ...) auffangen kann.

4. Drehgelenk (7) nach Anspruch 2, ferner umfassend eine Mehrzahl von Hochdruckkreis zum Kanalisieren entsprechender Farben (A, B,...) zu zumindest einer entsprechenden Spritzpistole, wobei jeder Hochdruckkreis entsprechende erste Kanäle (42, 52...) zum Kanalisieren der entsprechenden Farben (A, B,...) umfasst, welche innerhalb der Hohlwelle (14) aufgenommen sind, und wobei die Trommel eine Mehrzahl von Zwischenflanschen (9) umfasst, wobei die Zwischenflansche (9) paarweise jede Farbe (A, B,..) mit Rezirkulation kanalisieren; wobei die Zwischenflansche (9) jeweils eine entsprechende Ringkammer (41i oder 41o) umfassen, welche mit einem entsprechenden Kanal (42, 52;...; 43, 53...) zum Aufnehmen von Farbe verbunden sind, wobei die Zwischenflansche (9) paarweise zwischen dem ersten Endflansch (8) und dem zweiten Endflansch (8) angeordnet sind, und wobei die Trommel ringförmige Hohlräume (41) umfasst, welche in angrenzenden Zwischenflanschen (9) erhalten werden, wobei der erste Spalt (22i) und der zweite Spalt (22o) zwischen entsprechenden angrenzenden Zwischenflanschen (9), oder zwischen einem Zwischenflansch (9), welcher an einen Endflansch (8) angrenzt, erhalten werden.

5. Drehgelenk (7) nach einem der Ansprüche 1 bis 4, umfassend eine Mehrzahl von hohlen Zentrierringen (15), wobei der erste Spalt (22i), der zweite Spalt (22o) und der Zwischenhohlraum (45) jeweils innerhalb eines jeweiligen hohlen Zentrierrings (15) erhalten werden, wobei jeder Zentrierring in einem jeweiligen Sitz untergebracht ist, der wenigstens zwischen benachbarten Zwischenflanschen (9) oder zwischen benachbarten Zwischenflanschen (9) und Endflanschen (8) erhalten wird.

6. Drehgelenk (7) nach einem der vorhergehenden Ansprüche, umfassend ein in dem Endflansch (8) erhaltenes Loch (48), das mit einem Sitz in Verbindung steht, der ein Lager (19) aufnimmt, um den Abtrag von mit Kühl/Reinigungsflüssigkeit gemischter Farbe (A und/oder B und/oder ...) auf der Oberfläche des Gelenks (7) selbst zu ermöglichen.

7. Verfahren zum Lackieren von Gegenständen unter Verwendung einer Lackiermaschine (1) mit einem Drehgelenk (7) nach den Ansprüchen 1 bis 6, die folgenden Schritte umfassend:
- Entfernen zumindest einer Farbe (A, B, ...) von ihrem jeweiligen Versorgungstank (20) und Kanalisieren derselben zum Drehgelenk (7) durch wenigstens eine pneumatische Pumpe, vorzugsweise eine Kolbenpumpe, und von hier zu wenigstens einer Spritzpistole;
- Zirkulieren der mindestens einen Farbe (A, B, ...) innerhalb eines Hochdruckkreises (20, 11i, 41i, 42, Spritzpistole, 43, 41o, 11o, 20 für Farbe A; 20, 12i, 41i, 52, Spritzpistole, 53, 41o, 12o, 20 für Produkt B; ...);
**dadurch gekennzeichnet, dass** es den folgenden Schritt umfasst:
- vollständiges Umgeben des Hochdruckkreises von Farben (A, B, ...) innerhalb eines Niederdruckkreises (nicht gezeigter Tank, 10i, 22i, 45, 47, 45, 21, 45, 47, 45, 22o, 10o, nicht gezeigter Tank), in dem eine Kühl/Reinigungsflüssigkeit zirkuliert.

8. Verfahren zum Lackieren von Gegenständen nach Anspruch 7, wobei die mindestens eine Farbe (A, B, ...) rezirkuliert wird, wobei die mindestens eine nicht verbrauchte Farbe von ihrer mindestens einen Spritzpistole zu ihrem jeweiligen Versorgungstank (20) zurückgeführt wird.

9. Verfahren zum Lackieren von Gegenständen nach Anspruch 7 oder 8, wobei die Trübung der Kühl/Reinigungsflüssigkeit, die in ihrem (nicht gezeigten) Tank erfassbar ist, die Planung einer Ausfallszeit zum Ersetzen/Reinigen des Drehgelenks (7) ermöglicht.

10. Rundlaufspritzmaschine (1) zum Lackieren von Gegenständen umfassend eine Spritzkabine, einen Förderer für die zu lackierenden Gegenstände, einen drehbaren Träger (4), der eine Mehrzahl von Spritzpistolen trägt, **dadurch gekennzeichnet, dass** mindestens ein Drehgelenk (7) zum Verteilen von Farben (A, B, ...) nach einem der vorhergehenden Ansprüche (7) angeordnet ist, wobei vorzugsweise wenigstens zwei Drehgelenken (7) angeordnet sind, und zwar ein erstes Gelenk, welches an der Maschine angebracht ist und ein zweites Ersatzgelenk, wobei das zweite Drehgelenk (7) bei Ausfällen das außer Betrieb befindliche erste Gelenk (7) ersetzt, und die Reinigung/Reparatur des ersetzten, fehlerhaften ersten Gelenks (7) zu einem anderen Zeitpunkt bereitstellt.

## Revendications

1. Joint tournant (7) servant à distribuer une peinture (A) à au moins un pistolet de pulvérisation, comprenant :
- un arbre creux (14) qui tourne sur son axe longitudinal (L) ;
- un premier circuit à haute pression (20, 11i, 41i, 42, pistolet de pulvérisation) servant à canaliser une première peinture (A) vers un premier pistolet de pulvérisation, comprenant un premier conduit (42) destiné à ladite première peinture (A), logé à l'intérieur dudit arbre creux (14) ;
- un tambour comprenant une pluralité de brides coaxiales à l'axe (L), disposées autour de l'arbre (14) et en contact l'une avec l'autre, comprenant : au moins une première bride intermédiaire (9) comprenant de son côté une première chambre annulaire (41i) en communication avec ledit premier conduit (42) et pourvue d'une première ouverture (11i) appropriée pour recevoir ladite première peinture (A), qui est en communication avec ladite première chambre annulaire (4li) ; une première bride d'extrémité (8) et une deuxième bride d'extrémité (8), ladite première bride intermédiaire (9) étant interposée entre lesdites première et deuxième brides d'extrémité (8) ;
- ladite première peinture (A) dudit premier circuit à haute pression étant reçue de ladite première ouverture (11i) et étant canalisée vers ledit pistolet de pulvérisation en passant par ladite première chambre annulaire (41i) et ledit premier conduit (42) ;
**caractérisé en ce que**
- ladite première bride d'extrémité (8) comprend une ouverture d'entrée respective (10i) destinée à un liquide de réfrigération/nettoyage, ladite deuxième bride d'extrémité (8) comprend une ouverture d'évacuation respective (10o) dudit liquide de réfrigération/nettoyage, et ladite première bride intermédiaire (9) comprend un premier trou de raccordement respectif (21), en particulier parallèle audit axe (L) ;
**et en ce que**
- ledit tambour comporte un premier espace d'extrémité annulaire (22i), ménagé au moins en partie dans ladite première bride d'extrémité (8) et en communication avec ladite ouverture d'entrée (10i) dudit liquide de réfrigération/nettoyage ; un deuxième espace d'extrémité annulaire (22o) ménagé au moins en partie dans la deuxième bride d'extrémité (8) qui est en communication avec ladite ouverture d'évacuation (10o) de liquide de réfrigération/nettoyage, ledit premier trou de raccordement (21) étant en communication avec ledit premier espace (22i) et ledit deuxième espace (22o) ;
**et en ce que**
- ledit joint tournant comprend un circuit à basse pression (réservoir non représenté, 10i, 22i, 45, 47, 45, 21, 45, 47, 45, 22o, 10o, réservoir non représenté) permettant de canaliser ledit liquide de réfrigération/nettoyage de ladite ouverture d'entrée (10i) de ladite première bride d'extrémité (8) à ladite ouverture d'évacuation (10o) de ladite deuxième bride d'extrémité (8) à travers ledit premier espace (22i), ledit premier trou de raccordement (21) et ledit deuxième espace (22o) ;et
- ladite première chambre annulaire (41i) dudit circuit à haute pression étant interposée entre ledit premier espace (22i) et ledit deuxième espace (22o) le long dudit axe longitudinal (L) et est agencée plus à l'intérieur que le trou de raccordement (21) par rapport audit axe (L) de sorte que ledit circuit à basse pression (réservoir non représenté, 10i, 22i, 45, 47, 45, 21, 45, 47, 45, 22o, 10o, réservoir non représenté) entoure complètement ladite chambre (41i) et peut intercepter d'éventuelles fuites indésirables (44) de ladite première peinture (A).

2. Joint tournant (7) selon la revendication 1, dans lequel ledit premier circuit à haute pression comprend en outre un deuxième conduit (43) destiné à ladite première peinture (A), logé à l'intérieur de l'arbre (14) pour recevoir dudit pistolet de pulvérisation ladite première peinture non utilisée (A), et dans lequel ledit tambour comprend une deuxième bride intermédiaire (9) comprenant de son côté une chambre annulaire (41o), en communication avec ledit deuxième conduit (43), et une deuxième ouverture d'évacuation (11o) appropriée pour évacuer la première peinture non utilisée (A), qui sont en communication l'une avec l'autre, ladite deuxième bride intermédiaire (9) étant interposée entre ladite première bride intermédiaire (9) et ladite deuxième bride d'extrémité (8) et étant coaxiale audit axe (L) et en contact avec ladite première bride intermédiaire (9) ; ledit circuit à haute pression comprenant en outre ladite deuxième chambre annulaire (41o) et ledit deuxième conduit (43) pour canaliser avec recirculation ladite première peinture non utilisée (A) vers ladite deuxième ouverture (11o) à travers ledit deuxième conduit (43) destiné à ladite première peinture (A) et dans lequel ladite deuxième bride intermédiaire (9) comprend un deuxième trou de raccordement respectif (21), en particulier parallèle à l'axe (L) ;
et dans lequel ledit tambour comprend en outre une première cavité intermédiaire (45) ménagée dans ladite première bride intermédiaire (9) et dans ladite deuxième bride intermédiaire (9), ladite première cavité (45) étant en communication avec ledit premier trou de raccordement (21) et avec ledit deuxième trou (47),
et dans lequel ledit circuit à basse pression (réservoir non représenté, 10i, 22i, 45, 47, 45, 21, 45, 47, 45, 22o, 10o, réservoir non représenté) comprend en outre ladite première cavité intermédiaire (45) et ledit deuxième trou de raccordement (21) destiné à canaliser le liquide de réfrigération/nettoyage de ladite ouverture d'entrée (10i) de ladite première bride d'extrémité (8) à ladite ouverture d'évacuation (10o) de ladite deuxième bride d'extrémité (8) à travers ledit premier espace d'extrémité (22i), ledit premier trou de raccordement (21), ladite première cavité (45), ledit deuxième trou de raccordement (21) et ledit deuxième espace (22o) ;
ladite deuxième chambre annulaire (41o) étant interposée le long dudit axe (L) entre ladite première chambre (41i) et ledit deuxième espace (22o), et étant agencée plus à l'intérieur que ledit deuxième trou de raccordement (21), de sorte que ledit circuit à basse pression (réservoir non représenté, 10i, 22i, 45, 47, 45, 21, 45, 47, 45, 22o, 10o, réservoir non représenté) entoure également complètement ladite deuxième chambre annulaire et peut intercepter d'éventuelles fuites indésirables (44) de ladite première peinture non utilisée (A).

3. Joint tournant (7) selon la revendication 1, comprenant en outre au moins un deuxième circuit à haute pression servant à canaliser au moins une deuxième peinture (B, ...) vers au moins un deuxième pistolet de pulvérisation, comprenant un conduit respectif (52) destiné à ladite au moins une deuxième peinture (B, ...), logé à l'intérieur dudit arbre (14), et dans lequel ledit tambour comprend au moins une deuxième bride intermédiaire (9) comprenant une deuxième chambre annulaire (41), en communication avec ledit premier conduit (52) destiné à ladite au moins une deuxième peinture (B, ...), et une deuxième ouverture d'entrée (12i), appropriée pour recevoir ladite au moins une deuxième peinture (B, ...), qui est en communication avec ladite deuxième chambre annulaire (41), ladite au moins une deuxième bride intermédiaire (9) étant interposée entre ladite première bride intermédiaire (9) et ladite deuxième bride d'extrémité (8), coaxiale audit axe (L) et en contact avec ladite première bride intermédiaire (9) ; ledit au moins un deuxième circuit à haute pression comprenant en outre ladite deuxième chambre annulaire (41) et ledit premier conduit (52) servant à canaliser ladite au moins une deuxième peinture (B, ...) de ladite deuxième ouverture audit au moins un deuxième pistolet de pulvérisation ; et dans lequel ladite au moins une deuxième bride intermédiaire (9) comprend un deuxième trou de raccordement (21), en particulier parallèle audit axe (L) ;
et dans lequel ledit tambour comprend en outre une première cavité intermédiaire (45) ménagée au moins partiellement dans ladite première bride intermédiaire (9) et dans ladite deuxième bride intermédiaire (9), ladite première cavité intermédiaire (45) étant en communication avec ledit premier trou de raccordement (21), et avec ledit deuxième trou (47) ; et dans lequel ledit circuit à basse pression (réservoir non représenté, 10i, 22i, 45, 47, 45, 21, 45, 47, 45, 22o, 10o, réservoir non représenté) comprend ladite première cavité intermédiaire (45) et l'espace (22i), ledit premier trou de raccordement (21), ladite deuxième cavité intermédiaire (45), ledit trou (47), ledit deuxième trou de raccordement (21) et ledit deuxième espace (22o) pour canaliser ledit liquide de réfrigération/nettoyage de ladite ouverture d'entrée (10i) de ladite première bride d'extrémité (8) à ladite ouverture d'évacuation (10o) de ladite deuxième bride d'extrémité (8) ; ladite deuxième chambre annulaire (41) étant interposée le long de l'axe (L) entre ladite première chambre annulaire (41) et ledit deuxième espace (22o), et étant agencée plus à l'intérieur que ledit deuxième trou de raccordement (21), de sorte que ledit circuit à basse pression (réservoir non représenté, 10i, 22i, 45, 47, 45, 21, 45, 47, 45, 22o, 10o, réservoir non représenté) entoure complètement ladite deuxième chambre annulaire et peut intercepter d'éventuelles fuites indésirables (44) desdites peintures (A et/ou B et/ou ...).

4. Joint tournant (7) selon la revendication 2, comprenant en outre une pluralité de circuits à haute pression servant à canaliser des peintures respectives (A, B, ...) vers au moins un pistolet de pulvérisation respectif, chaque circuit à haute pression comprenant des premiers conduits respectifs (42, 52, ...) servant à canaliser des peintures respectives (A, B, ...), logés à l'intérieur dudit arbre creux (14), et dans lequel ledit tambour comprend une pluralité de brides intermédiaires (9), lesdites brides intermédiaires (9) étant disposées par paires pour canaliser chaque peinture (A, B, ...) avec recirculation ; lesdites brides intermédiaires (9) comprenant chacune une chambre annulaire respective (41i ou 41o) en communication avec un conduit respectif (42, 52, ... ; 43, 53, ...) pour recevoir ladite peinture, lesdites brides intermédiaires (9) étant agencées par paires entre ladite première bride d'extrémité (8) et la deuxième bride d'extrémité (8), et dans lequel ledit tambour comprend des cavités annulaires (41) ménagées dans des brides intermédiaires adjacentes respectives (9), ledit premier espace (22i) et ledit deuxième espace (22o) étant ménagés entre des brides intermédiaires adjacentes respectives (9). ou entre une bride intermédiaire (9) adjacente à une bride d'extrémité (8).

5. Joint tournant (7) selon l'une des revendications 1 à 4, comprenant une pluralité de bagues de centrage creuses (15), ledit premier espace (22i), ledit deuxième espace (22o) et ladite cavité intermédiaire (45) étant ménagés à l'intérieur d'une bague de centrage creuse respective (15), chaque bague de centrage étant logée dans un siège respectif ménagé au moins entre des brides intermédiaires adjacentes (9), ou entre des brides intermédiaires adjacentes (9) et des brides d'extrémité (8).

6. Joint tournant (7) selon l'une quelconque des revendications précédentes, comprenant un trou (48) ménagé dans ladite bride d'extrémité (8) communiquant avec un siège logeant un palier (19), ce qui permet l'évacuation de la peinture (A et/ou B et/ou ...) mélangée avec un liquide de réfrigération/nettoyage sur la surface dudit joint (7) lui-même.

7. Procédé de peinture d'articles mettant en oeuvre une machine à peindre (1) comprenant un joint tournant (7) selon les revendications 1 à 6, le procédé comprenant les étapes suivantes :
- soutirer au moins une peinture (A, B, ...) de son réservoir d'alimentation respectif (20) et la canaliser vers ledit joint tournant (7) à travers au moins une pompe pneumatique, de préférence une pompe à piston, puis vers au moins un pistolet de pulvérisation ;
- faire circuler ladite au moins une peinture (A, B, ...) à l'intérieur d'un circuit à haute pression (20, 11i, 41i, 42, pistolet de pulvérisation, 43, 41o, 11o, 20 destiné à la peinture A ; 20, 12i, 41i, 52, pistolet de pulvérisation, 53, 41o, 12o, 20 destiné au produit B ;...) ;
**caractérisé en ce qu'**il comprend l'étape suivante :
- entourer complètement le circuit à haute pression de peintures (A, B, ...) à l'intérieur d'un circuit à basse pression (réservoir non représenté, 10i, 22i, 45, 47, 45, 21, 45, 47, 45, 22o, 10o, réservoir non représenté), à l'intérieur duquel circule un liquide de réfrigération/nettoyage.

8. Procédé de peinture d'articles selon la revendication 7, dans lequel ladite au moins une peinture (A, B, ...) est mise en recirculation, ce qui canalise en retour ladite au moins une peinture non utilisée de son au moins un pistolet de pulvérisation vers son réservoir d'alimentation respectif (20).

9. Procédé de peinture d'articles selon la revendication 7 ou 8, dans lequel la turbidité dudit liquide de réfrigération/nettoyage détectable dans son réservoir (non représenté) permet de prévoir un temps d'arrêt pour le remplacement/nettoyage dudit joint tournant (7).

10. Machine de pulvérisation à rotation circulaire (1) destinée à la peinture d'articles comprenant une cabine de pulvérisation, un convoyeur destiné auxdits articles à peindre, un support rotatif (4) supportant une pluralité de pistolets de pulvérisation, **caractérisée en ce qu'**elle est munie d'au moins un joint tournant (7) destiné à la distribution de peintures (A, B, ...) selon l'une des revendications précédentes (7), muni de préférence d'au moins deux joints tournants (7), d'un premier joint monté sur ladite machine et d'un deuxième joint de réserve, ledit deuxième joint rotatif (7) remplaçant pendant un temps d'arrêt le premier joint (7) défectueux, ce qui permet de nettoyer/réparer à un autre moment le premier joint (7) défectueux remplacé.
